# EUROPÄISCHE PATENTSCHRIFT

(11) **EP 0 754 577 B1**
(45) Veröffentlichungstag und Bekanntmachung des Hinweises auf die Patenterteilung: **11.04.2001**
(21) Anmeldenummer: 96108367.2
(22) Anmeldetag: 25.05.1996
(51) Int. Cl.: B60G 17/015

(54) **Radaufhängungsregelsystem für Kraftfahrzeuge**
Suspension control system for motor vehicles
Système de réglage de suspension pour véhicules automobiles

(30) Priorität: 15.07.1995 DE 19525835
(43) Veröffentlichungstag der Anmeldung: 22.01.1997
(73) Patentinhaber: Bayerische Motoren Werke Aktiengesellschaft, 80788 München (DE)
(72) Erfinder: Zieglmeier, Franz, 80809 München (DE); Dettloff, Günter, 85386 Eching (DE); Jurr, Reinhold, 81247 München (DE); Zahnweh, Rainer, 83128 Halfing (DE)

(56) Entgegenhaltungen:
- EP-A- 0 397 181
- PATENT ABSTRACTS OF JAPAN vol. 011, no. 146 (M-587), 13. Mai 1987 & JP 61 282110 A (NISSAN MOTOR CO LTD), 12. Dezember 1986

## Beschreibung

Die Erfindung bezieht sich auf ein Radaufhängungsregelsystem für Kraftfahrzeuge zum Einstellen eines Sollabstands eines Rades vom Fahrzeugaufbau mit einer Sensorvorrichtung zur Messung des Istabstands des Rades und einer Auswertevorrichtung zur Erkennung eines abnormalen Verhaltens des Istabstands.

JP 61 282 110 beschreibt ein Radauf hängungssystem mit mehreren Sensoren, bei dem auf den Fehler eines Sensors geschlossen wird, wenn dieser Keine Abstandsänderung erkennt, Während die anderen Sensoren Abstandsänderungen für mindestens einen bestimmten Zeitraum detektieren.

Ein Radaufhängungsregelsystem gemäß dem Oberbegriff von Anspruch 3 ist beispielsweise aus der DE 39 20 165 A1 bekannt. Bei diesem bekannten Radaufhängungsregelsystem werden zur Erkennung eines abnormalen Verhaltens des Istabstands, z.B. in Form eines abnormalen Anstiegs oder einer abnormalen Abnahme des Istabstands eines Rades vom Fahrzeugaufbau, jeder gemessene Istabstand eines Rades für sich mit einem Schwellwert verglichen und die Differenz der gemessenen Istabstände der Räder zumindest einer Achse sowie die Differenz der gemessenen Istabstände zumindest zweier diagonal gegenüberliegender Räder ermittelt und ebenfalls mit Schwellwerten verglichen. Wird bezüglich des Istabstandes eines Rades ein abnormaler Anstieg oder eine abnormale Abnahme festgestellt, wird auf das Vorliegen eines Steines auf der Fahrbahn oder eines Loches in der Fahrbahn geschlossen und daraufhin das Radaufhängungsregelsystem bzw. die Stellantriebe zum Einstellen der Sollabstände der Räder vom Fahrzeugaufbau kurzzeitig blockiert. Dieses bekannte Radaufhängungsregelsystem geht demnach nur auf das kurzzeitige Auftreten eines abnormalen Verhaltens des Istabstandes eines Rades ein.

Es ist Aufgabe der Erfindung, ein Radaufhängungsregelsystem eingangs genannter Art derart zu verbessern, daß nicht nur ein kurzzeitiges abnormales Verhalten des Istabstands aufgrund einer Fahrbahnunebenheit sondern auch ein länger andauerndes und gravierenderes abnormales Verhalten des Istabstands, z.B. aufgrund eines Defekts, erkannt und ausgewertet wird.

Diese Aufgabe wird durch die kennzeichnenden Merkmale der Patentansprüche 1 und 3 gelöst.

Nach Patentanspruch 1 erfaßt eine Auswertevorrichtung die Änderung des Istabstands des Fahrzeugaufbaus von mindestens zwei Rädern, vorzugsweise von den Rädern einer Achse, und vergleicht diese Änderungen mit einem unteren sowie mit einem oberen zulässigen Schwellwert. Die Auswertevorrichtung schließt auf einen Defekt an einer Sensorvorrichtung, wenn innerhalb eines vorgegebenen Zeitfensters die Änderung des Istabstands eines Rades den unteren Schwellwert unterschreitet und die Änderung des Istabstands eines anderen Rades den oberen Schwellwert überschreitet.

Durch diese Auswertung wird ein stark abnormales Verhalten insbesondere des Istabstands des Rades erfaßt, dessen Istabstandänderung den unteren Schwellwert unterschreitet. Überschreitet gleichzeitig die Änderung des Istabstands des anderen Rades, vorzugsweise der gleichen Achse, den oberen Schwellwert, wird auf einen Defekt an der Sensorvorrichtung geschlossen, mittels derer die untere Schwellwertunterschreitung erfaßt wurde.

Durch dieses erfindungsgemäße Radaufhängungsregelsystem ist sowohl die Erkennung als auch die Ortung eines Defekts möglich, wodurch gerade bei länger anhaltendem abnormalen Verhalten Notlauffunktionen ausgelöst werden können, die die Verfügbarkeit weniger einschränken als die aus dem Stand der Technik bekannte Blockiermaßnahme.

Zusätzlich oder alternativ zu der Erfindung nach Patentanspruch 1 wird nach Patentanspruch 3 erfindungsgemäß durch die Auswertevorrichtung die Istregelzeitdauer zumindest der Räder einer Achse erfaßt. Die Auswertevorrichtung schließt auf einen Defekt an der Sensorvorrichtung des Rades, bei dem die Istregelzeitdauer zum Einstellen eines Sollabstands eine maximal zulässige Sollregelzeitdauer überschritten hat, während der Istabstand mindestens eines weiteren Rades gleich dem Sollabstand ist; d.h. beispielsweise, nachdem mindestens ein weiteres Rad, z. B. das zweite Rad derselben Achse, den Sollabstand bereits erreicht hat bzw. die Regelung bereits beendet hat. Erfindungsgemäß wird demnach das Regelverhalten eines Rades beobachtet, das - z.B. bezogen auf die Räder einer Achse oder bezogen auf alle Räder des Fahrzeugs - alleine einen Regelvorgang durchführt bzw. weiterführt.

Auch durch diese erfindungsgemäße Lösung wird ein länger andauerndes abnormales Verhalten eines Istabstands und damit ein Defekt an der Sensorvorrichtung eines Rades erkannt und geortet. Hierauf ist ebenfalls eine Notlauffunktion möglich, die die Verfügbarkeit des Radaufhängungsregelsystems gegenüber der Blockiermaßnahme erhöht.

Vorteilhafte Ausgestaltungen der Erfindung sind die Gegenstände des Patentanspruchs 2 und des Patentanspruchs 4.

Nach Patentanspruch 2 ist erfindungsgemäß die Auswertevorrichtung während eines Regelvorgangs ausgeschaltet. Dies ist eine Weiterbildung des Gegenstands des Patentanspruchs 1, da bei der Erfassung der Änderung eines Istabstands Änderungen, die durch den Regelvorgang vorgenommen werden, nicht erfaßt werden. Somit wird eine genauere Auswertung und Erkennung eines Defekts möglich.

Beim Gegenstand nach Patentanspruch 4 wird bei erkanntem Defekt an einer Sensorvorrichtung eines Rades der Istabstand dieses Rades entsprechend dem Sollabstand eines Rades, insbesondere des anderen Rades derselben Achse, mit intakter Sensorvorrichtung gesteuert.

Dieser Gegenstand ist eine Weiterbildung für die Gegenstände der Patentansprüche 1 bis 3 und erzielt den Vorteil, daß bei erkanntem Defekt eine Notlauffunktion möglich ist, die eine besonders hohe Verfügbarkeit des Radaufhängungsregelsystems gewährleistet, da das Radaufhängungsregelsystem nur eine sehr gering eingeschränkte Regelfunktion durchführt. Hierdurch wird sowohl der Komfort als auch die Sicherheit für den Fahrer kaum beeinträchtigt. Vorzugsweise wird jedoch trotzdem eine Fehlermeldung an den Fahrer ausgegeben, um durch eine Reparatur wieder ein optimales Radaufhängungsregelsystem zu schaffen. Die Auswertevorrichtung kann auch nach Erkennung eines Defekts eingeschaltet bleiben, um bei einem nur sporadisch defekten Sensor die Erkennung des Defekts und damit die evtl. verbundene Notlauffunktion wieder zurücksetzen zu können, wenn ein zuvor als defekt erkannter Sensor wieder intakt ist.

In der Zeichnung ist ein Ausführungsbeispiel der Erfindung dargestellt. Es zeigt
- Fig. 1: eine Auswertevorrichtung, die einen Defekt an einer Sensorvorrichtung aufgrund der Auswertung der Änderung der Istabstände und/oder aufgrund der Auswertung der Istregelzeitdauer der Stellglieder der beiden Räder einer Achse erkennt und
- Fig. 2: eine mögliche Definition der maximal zulässigen Soll-regelzeitdauer für ein Rad.

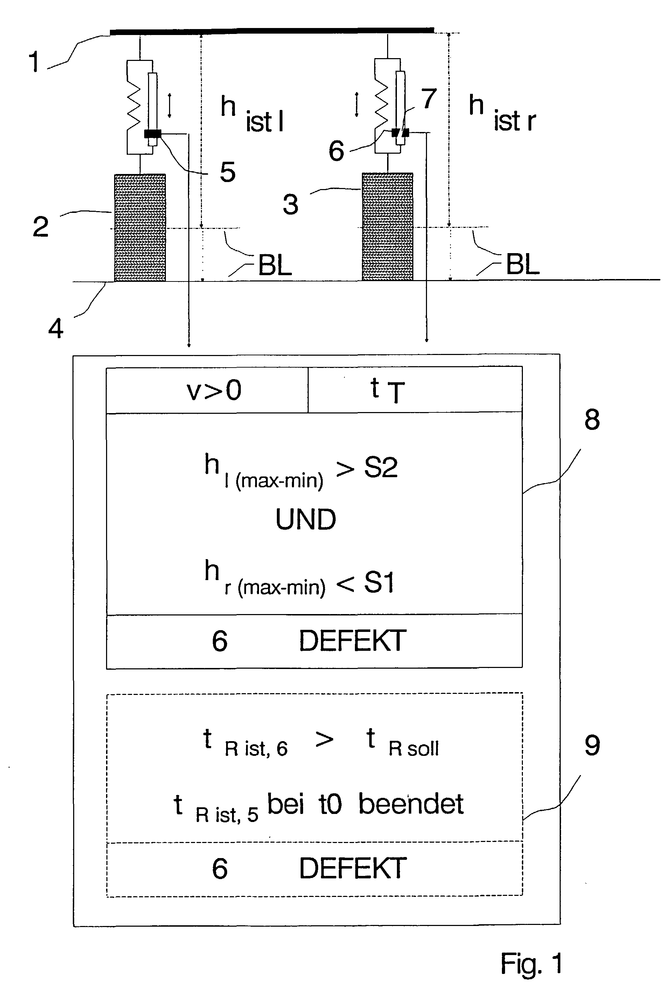

In Fig. 1 ruht ein Fahrzeugaufbau 1 über eine nicht näher bezeichnete Feder/Dämpfereinheit auf den beiden Rädern 2 und 3 einer Achse. Der Istabstand h_{ist l} des linken Rades 2 vom Fahrzeugaufbau 1 sowie der Istabstand h_{ist r} des rechten Rades 3 vom Fahrzeugaufbau 1 sind durch eine Bezugslinie BL definiert. Diese Bezugslinie BL kann beispielsweise durch die Fahrbahn 4 oder die Achse durch die Radnabe vorgegeben sein. Die Istabstände h_{ist l} und h_{ist r} werden durch die Sensoren 5 und 6 erfaßt. Die Signale der Sensoren 5 und 6 werden an die Auswertevorrichtung 8 bzw. 9 weitergeleitet. Der Sensor 6 weist in diesem Ausführungsbeispiel einen Defekt in Form eines Bruches 7 auf.

Innerhalb eines vorgegebenen Zeitfensters t_{T} bei einer Fahrzeuggeschwindigkeit v, die größer als ein vorgegebener Wert v₁ ist, werden die Änderung h_{l (maxmin)} des Istabstandes h_{ist l} des linken Rades 2 und die Änderung h_{r (max-min)} des Istabstandes h_{ist r} des rechten Rades 3 beide mit einer unteren, minimal zulässigen Schwelle S1 und mit einer oberen, maximal zulässigen Schwelle S2 verglichen. Die Änderung des Istabstandes eines Rades wird vorzugsweise als die Differenz zwischen dem innerhalb des vorgegebenen Zeitfensters t_{T} erfaßten maximalen Istabstand und dem innerhalb des vorgegebenen Zeitfensters t_{T} erfaßten minimalen Istabstand definiert. Die Änderung des Istabstandes kann jedoch auch als die erste Ableitung des erfaßten Istabstandes (dh/dt) definiert werden. Da im vorliegenden Ausführungsbeispiel die Änderung des Istabstandes h_{ist l} des linken Rades 2 die obere Schwelle S2 überschreitet und die Änderung des Istabstands h_{ist r} des rechten Rades die untere Schwelle S1 unterschreitet, erkennt die Auswertevorrichtung 8 einen Defekt an dem Sensor bzw. der Sensorvorrichung 6. Daraufhin wird vorzugsweise die Regelung zum Einstellen eines Sollabstandes der Räder 2 und 3 vom Fahrzeugaufbau 1 nur noch in Abhängigkeit von dem mittels des Sensors 5 erfaßten Istabstands h_{ist l} des linken Rades 2 durchgeführt. Sollte der Bruch 7 lediglich sporadisch auftreten, wird bei erkanntem intakten Sensor 6 wieder auf eine Regelung in Abhängigkeit von beiden Sensoren 5 und 6 umgeschaltet. Diese Umschaltung findet beispielsweise dann statt, wenn die Änderungen des Istabstands h_{ist l} und des Istabstands h_{ist r} in einem vorgegebenen Zeitfenster erstmalig beide über der oberen Schwelle S2 liegen. Die vorgegebenen Zeitfenster sowie die obere Schwelle S2 werden vorzugsweise empirisch ermittelt und abgespeichert. Die untere Schwelle S1 ist ein Schwellwert, der vorzugsweise mindestens doppelt so groß wie die Auflösung der Sensorvorrichtungen bzw. der Sensoren 5 und 6 ist. Durch das Ausführungsbeispiel wird gezeigt, daß eine optimale Verfügbarkeit des Radaufhängungsregelsystems auch bei Auftreten von einem Defekt geschaffen wird.

Alternativ oder zusätzlich zur Auswertevorrichung 8 kann die gestrichelt gezeichnete Auswertevorrichtung 9 vorgesehen sein, die die Istregelzeitdauer t_{Rist. 5} und t_{Rist. 6} für die Ansteuerung der hier nicht dargestellten Stellglieder zur Einstellung der Sollabstände der Räder 2 und 3 vom Fahrzeugaufbau 1 mittels der Sensoren 5 und 6 erfaßt.

Die dem linken Rad 2 zugeordnete Istregelzeitdauer t_{Rist}, 5 ist zum Zeitpunkt t₀ beendet, da beispielsweise der vorgegebene Sollabstand für das Rad 2 eingestellt ist. Vor dem Zeitpunkt t₀ werden Regelvorgänge für beide Räder 2 und 3 vorgenommen. Die Istregelzeitdauer t_{Rist}, 6 hält im dargestellten Beispiel über den Zeitpunkt t₀ hinaus weiter an. Nach Ende des Regelvorgangs des einen Rades, in diesem Fall des Rades 2, wird die Istregelzeitdauer t_{Rist}, 6 des anderen Rades 3 derselben Achse mit einer maximal zulässigen Sollregelzeitdauer t_{Rsoll} verglichen. Diese maximal zulässige Sollregelzeitdauer t_{Rsoll} kann auf verschiedene Weise definiert sein. Überschreitet die Istregelzeitdauer t_{Rist}, 6 die maximal zulässige Soll-regelzeitdauer t_{Rsoll}, erkennt die Auswertevorrichtung 9, daß der Sensor 6 defekt ist.

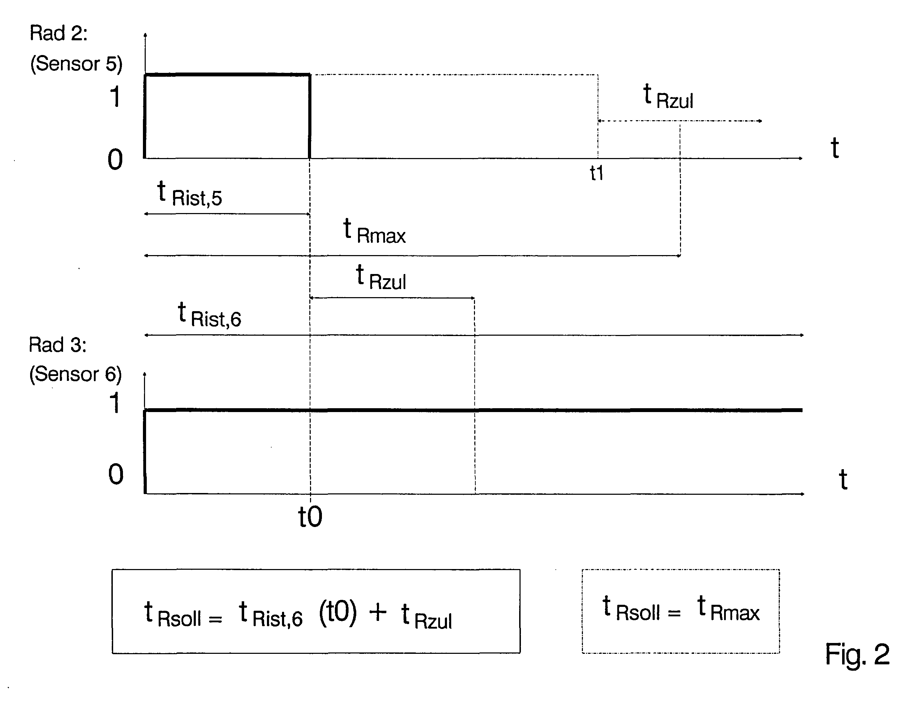

In Fig. 2 wird an einem Beispiel eine bevorzugte Definition der maximal zulässigen Sollregelzeitdauer t_{Rsoll} erläutert. In Fig. 2 sind schematisch die Regelvorgänge für die Räder 2 und 3 über der Zeit dargestellt. Ein aktivierter Regelvorgang wird durch eine logische Eins "1" und ein deaktivierter Regelvorgang durch eine logische Null "0" angegeben.

Zu Beginn der Diagramme in Fig. 2 werden für beide Räder 2 und 3 Regelvorgänge zur Einstellung der Sollabstände gestartet. Der Regelvorgang für das Rad 2 ist nach einer Istregelzeitdauer t_{Rist}, 5 zum Zeitpunkt t₀ abgeschlossen. Durch dieses Ereignis zum Zeitpunkt t₀ wird eine vorgegebene zulässige Sollregelzeitdauer t_{Rzul} gestartet. Hierdurch ergibt sich für das Rad 3 eine maximal zulässige Sollregelzeitdauer t_{Rsoll} aus der Addition der Istregelzeitdauer t_{Rist}, 6 bis zum Zeitpunkt t₀ und der nach dem Zeitpunkt t₀ definierten zulässigen Sollregelzeitdauer t_{Rzul}. Hält wie im dargestellten Beispiel nach Fig. 2 der Regelvorgang für das weiterregelnde Rad 3 nach dem Zeitpunkt t₀ noch solange an, bis die maximal zulässige Sollregelzeitdauer t_{Rsoll} bzw. die zulässige Sollregelzeitdauer t_{Rzul} nach dem Zeitpunkt t₀ überschritten ist, wird für den Sensor 6 des Rades 3 ein Defekt erkannt. Vorzugsweise wird daraufhin eine nur teilweise eingeschränkte Regelung vorgenommen, indem in Abhängigkeit vom Istabstand h_{ist I}, der durch den Sensor 5 erfaßt wird, der Sollabstand für beide Räder 2 und 3 einer Achse eingestellt wird.

Das Ausführungsbeispiel nach Fig. 2 kann dahingehend weiter ausgebildet werden, indem ab dem Zeitpunkt, zu dem beide Räder 2 und 3 gleichzeitig einen Regelvorgang ausführen, eine absolute maximal zulässige Sollregelzeitdauer t_{Rmax} definiert wird. Nur wenn die Regelvorgänge beider Räder 2 und 3 diese absolute maximal zulässige Sollregelzeitdauer t_{Rmax} überschreiten, wird das Regelsystem blockiert.

In dem strichpunktiert gezeichneten Beispiel nach Fig. 2 endet der Regelvorgang des Rades 2 zu einem Zeitpunkt t1, bei dem die zulässige Soll-regelzeitdauer ^{t}Rzul erst nach der absoluten maximal zulässigen Sollregelzeitdauer ^{t}Rmax abläuft.

In diesem Fall wird zum einen die Regelung uneingeschränkt weitergeführt, wenn zwischen dem Ende des Regelvorganges des Rades 2 und dem Ablauf der absoluten maximal zulässigen Sollregelzeitdauer t_{Rmax} der Regelvorgang für das Rad 3 beendet wird.

Zum anderen wird in diesem Fall gemäß einem ersten Beispiel das Regelsystem unabhängig vom Ablauf der zulässigen Sollregelzeitdauer t_{Rzul} blockiert, wenn der Regelvorgang des Rades 3 die absolute maximal zulässige Sollregelzeitdauer t_{Rmax} überschreitet.

Gemäß einem zweiten Beispiel wird eine eingeschränkte Regelung in Abhängigkeit vom Istabstand h_{ist l}, der durch den intakten Sensor 5 erfaßt wird, für beide Räder 2 und 3 vorgenommen, wenn nach dem Ablauf der absoluten maximal zulässigen Sollregelzeitdauer t_{Rmax} der Regelvorgang für das Rad 3 noch nicht beendet ist. In diesem Fall ist die maximal zulässige Sollregelzeitdauer ^{t}_{Rsoll} mit dem Ablauf der absoluten maximal zulässigen Sollregelzeitdauer ^{t}_{Rmax} beendet (vgl. strichpunktiertes Kästchen).

Gemäß einem dritten Beispiel kann jedoch die eingeschränkte Regelung für beide Räder 2 und 3 auch erst dann vorgenommen werden, wenn nach Ablauf der zulässigen Sollregelzeitdauer t_{Rzul} - unabhängig von der absoluten maximal zulässigen Sollregelzeitdauer t_{Rmax} - der Regelvorgang für das Rad 3 noch nicht beendet ist. In diesem Fall ergibt sich die maximal zulässige Sollregelzeitdauer t_{Rsoll} aus der Addition der Istregelzeitdauer t_{Rist, 6} bis zum Zeitpunkt t₁ und der nach dem Zeitpunkt t₁ beginnenden zulässigen Sollregelzeitdauer t_{Rzul}.

Ergänzend wird darauf hingewiesen, daß die Erfindung z.B. auch ein Ausführungsbeispiel umfaßt, bei dem nur für ein Rad, z.B. für das Rad 3, ein Regelvorgang zur Einstellung eines Sollabstands durchgeführt wird, da zumindest am anderen Rad derselben Achse, z.B. am Rad 2, bereits der Istabstand h_{ist l} gleich dem Sollabstand ist. In diesem Fall wird die Ist- Regelzeitdauer t_{Rist}, 6 für das Rad 6 ausschließlich mit der zulässigen Soll-regelzeitdauer t_{Rzul} als maximal zulässige Sollregelzeitdauer t_{Rsoll} verglichen. Die zulässige Sollregelzeitdauer t_{Rzul} kann in Abhängigkeit von Fahrzeugbetriebszuständen, z.B. in Abhängigkeit von einer Ein-Rad- oder einer Zwei-Rad-Regelung, unterschiedlich vorgegeben werden. Auch bei Erkennung eines Defekts durch die Überschreitung der zulässigen Sollregelzeitdauer t_{Rzul} als maximal zulässige Sollregelzeitdauer t_{Rsoll} bei einer Ein-Rad-Regelung wird beispielsweise auf die eingeschränkte Ein-Sensor-Regelung umgeschaltet.

Mit den genannten Ausführungsbeispielen wird ein ausgewogener Kompromiß zwischen der Verfügbarkeit des Radaufhängungsregelsystems und der Sicherheit des Kraftfahrzeugs erreicht.

## Patentansprüche

1. Radaufhängungsregelsystem für Kraftfahrzeuge zum Einstellen eines Sollabstands eines Rades vom Fahrzeugaufbau mit einer Sensorvorrichtung zur Messung des Istabstands des Rades vom Fahrzeugaufban und einer Auswertevorrichtung zur Erkennung eines abnormalen Verhaltens des Istabstands, wobei die Auswertevorrichtung (8,9) die Änderung des Istabstands (h_{ist I}, h_{ist r}) mindestens zweier Räder (2, 3) erfaßt, mit einem unteren (S1) sowie mit einem oberen (S2) zulässigen Schwellwert vergleicht und wenn innerhalb eines vorgegebenen Zeitfensters (t_{T}) die Änderung des Istabstands (h_{ist r}) eines Rades (3) den unteren Schwellwert (S1) unterschreitet und die Änderung des Istabstands (h_{ist l}) eines anderen Rades (2) den oberen Schwellwert (S2) überschreitet, auf einen Defekt (DEFEKT; 7) an der Sensorvorrichtung (5, 6) schließt, deren Wert zur unteren Schwellwertunter schreitung geführt hat.

2. Radaufhängungssystem nach Patentanspruch 1, dadurch gekennzeichnet, daß die Auswertevorrichtung (8) während eines Regelvorgangs ausgeschaltet ist.

3. Radaufhängungsregelsystem für Kraftfahrzeuge zum Einstellen eines Sollabstands eines Rades vom Fahrzeugaufbau mit einer Sensorvorrichtung zur Messung des Istabstands des Rades und einer Auswertevorrichtung zur Erkennung eines abnormalen Verhaltens des Istabstands, dadurch gekennzeichnet, daß die Auswertevorrichtung (8, 9) die Ist-Regelzeitdauer (t_{Rist,5}, t_{Rist,6}) zumindest der Räder (2, 3) einer Achse erfaßt und auf einen Defekt (DEFEKT; 7) an der Sensorvorrichtung (6) des Rades (3) schließt, bei dem die Ist-Regelzeitdauer (t_{Rist,6}) zum Einstellen eines Sollabstands eine maximal zulässige Soll-Regelzeitdauer (t_{Rsoll}) überschreitet, während der Istabstand (h_{ist l}) mindestens eines weiteren Rades (2) gleich dem Sollabstand ist.

4. Radaufhängungssystem nach einem der Patentansprüche 1 bis 3, dadurch gekennzeichnet, daß bei erkanntem Defekt (DEFEKT; 7) an einer Sensorvorrichtung (6) eines Rades (3) der Istabstand dieses Rades (3) entsprechend dem Sollabstand eines Rades (2) mit intakter Sensorvorrichtung (5) gesteuert wird.

## Claims

1. A wheel suspension adjustment system for motor vehicles for obtaining a set distance of a wheel from the vehicle body, comprising a sensor device for measuring the actual distance of the wheel from the body and an evaluating device for recognising an abnormal variation in the actual distance, wherein the evaluating device (8, 9) compares the change in the actual distance (h_{ist I}, h_{ist r}) of at least two wheels (2, 3) with a lower permissible threshold value (S1) and with an upper permissible threshold value (S2) and if within a given time window (t_{T}) the change in the actual distance (h_{ist r}) of one wheel (3) falls below the lower threshold value (S1 ) and the change in the actual distance (h_{ist I}) of another wheel (2) exceeds the upper threshold value (S2), the evaluating device concludes that there is a defect (DEFECT; 7) in the sensor device (5, 6), the reading of which has resulted in the drop below the lower threshold value.

2. A wheel suspension system according to claim 1, **characterised in that** the evaluating device (8) is switched off during an adjustment operation.

3. A wheel suspension adjustment system for motor vehicles for obtaining a set distance of a wheel from the vehicle body, comprising a sensor device for measuring the actual distance of the wheel and an evaluating device for recognising an abnormal variation in the actual distance, **characterised in that** the evaluating device (8, 9) detects the actual duration of adjustment (t_{Rist,5,} t_{Rist,6}) of at least the wheels (2, 3) on an axle and concludes that there is a defect (DEFECT;7) in the sensor device (6) for the wheel (3) where the actual duration of adjustment (t_{Rist,6}) for obtaining a set distance exceeds a maximum permissible set duration of adjustment (t_{Rsoll}), whereas the actual distance (h_{ist l}) of at least another wheel (2) is equal to the set distance.

4. A wheel suspension system according to any of claims 1 to 3, **characterised in that** if a defect (DEFECT;7) is recognised in a sensor device (6) for a wheel (3), the actual distance of the wheel (3) is adjusted to correspond to the set distance of a wheel (2) where the sensor device (5) is intact.

## Revendications

1. Système de réglage de suspension de roue, pour véhicules automobiles, servant à mettre en place une distance de consigne d'une roue par rapport au châssis du véhicule, avec un dispositif de détection, qui sert à mesurer la distance réelle de la roue par rapport au châssis du véhicule, et avec un dispositif d'exploitation qui sert à identifier un comportement anormal de la distance réelle,
caractérisé en ce que
le dispositif d'exploitation (8, 9) détecte la variation de la distance réelle (h_{ist l}, h_{ist r}) d'au moins deux roues (2, 3), compare avec une valeur de seuil inférieure (S1) et une valeur de seuil supérieure (S₂) autorisées et, quand à l'intérieur d'un intervalle de temps prédéfini (t_{T}) la variation de la distance réelle (h_{ist r}) d'une roue (3) tombe en dessous de la valeur de seuil inférieure et la variation de la distance réelle (h_{ist l} ) d'une autre roue (2) dépasse la valeur de seuil supérieure (S₂ ) conclut à un défaut (DEFAUT; 7) sur le dispositif de détection (5, 6), dont la valeur a conduit au sous-dépassement de la valeur de consigne inférieure.

2. Système de réglage de suspension de roue, selon la revendication 1,
caractérisé en ce que
le dispositif d'exploitation (8) est débranché pendant un processus de réglage.

3. Système de réglage de suspension de roue, pour véhicules automobiles, servant à mettre en place une distance de consigne d'une roue par rapport au châssis du véhicule, avec un dispositif de détection, qui sert à mesurer la distance réelle de la roue par rapport au châssis du véhicule, et avec un dispositif d'exploitation qui sert à identifier un comportement anormal de la distance réelle,
caractérisé en ce que
le dispositif d'exploitation (8, 9) détecte la durée réelle de réglage (t_{Rist, 5} ,t_{Rist, 6)} d'au moins les deux roues (2,3) d'un même essieu et conclut à un défaut (DEFAUT, 7) sur le dispositif de détection (6) de la roue (3), sur laquelle la durée réelle de réglage (t_{Rist, 6}) servant à régler une distance de consigne dépasse une durée de réglage de consigne autorisée au maximum (t_{Rsoll}).

4. Système de réglage de suspension de roue, selon l'une des revendications 1 à 3,
caractérisé en ce que
quand un défaut (DEFAUT;7) a été identifié sur un dispositif de détection (6) d'une roue (3) on règle la distance réelle de cette roue (3) en fonction de la distance de consigne d'une roue (2) ayant un dispositif de détection (5) intact.
